Europäisches Patentamt

European Patent Office

Office européen des brevets

(11) Publication number: **0 152 616**
**A2**

(12) **EUROPEAN PATENT APPLICATION**

(21) Application number: **84116114.4**

(22) Date of filing: **21.12.84**

(51) Int. Cl.⁴: **B 31 F 1/00**

---

(30) Priority: **23.12.83 US 565065**

(43) Date of publication of application: **28.08.85**
**Bulletin 85/35**

(84) Designated Contracting States: **BE CH DE FR GB IT LI NL SE**

(71) Applicant: **International Paper Company, 77 West 45th Street, New York New York 10036 (US)**

(72) Inventor: **Richardson, Larry A., R. D.**
**No. 3 Box 239 Collabor Road, Middletown, NY 10940 (US)**
Inventor: **Fairand, Barry P., 2554 Lane Road, Columbus, Ohio 43220 (US)**

(74) Representative: **Reichel, Wolfgang, Dipl.-Ing. et al, Reichel und Reichel Parkstrasse 13, D-6000 Frankfurt am Main 1 (DE)**

---

(54) **Method and apparatus to achieve raw edge protection.**

㊷ The present invention is directed to a method and apparatus for providing raw edge protection on the edge (12) of a paper laminate (10) such as a polyethylene-paper-polyethylene-aluminum foil-polyethylene laminate (14, 16, 18, 20, 22). Such laminates are useful in forming paperboard containers for foodstuffs or other products which are to be protected against the entry of moisture, bacteria, or other contaminants. According to the method and apparatus of this invention, a laser beam is employed to burn away the exposed edge of the paperboard layer of the laminate as it moves relative to the laser beam. After removal of a strip of the paperboard from an edge of the laminate, the remaining areas of the laminate (40, 42) are pressed together and sealed as by the application of heat. In a modified method, a polyethylene powder stream, or a polyethylene filament, is continuously melted and flows over the remaining edge (44) of the paperboard, to thus seal it. The invention may be applied to a continuous web or single blank of the paper laminate.

## METHOD AND APPARATUS TO ACHIEVE
## RAW EDGE PROTECTION

This invention relates to a method of treating at least one of the raw edges of a paperboard container made from a laminate construction, the laminate construction including at least one layer of paperboard and at least two surrounding layers of a thermoplastic, such as polyethylene. The laminate may include additional layers such as layers of aluminum foil or the like. Such laminates exhibit utility in the construction of containers, such as containers for food stuffs. The purpose of the thermoplastic and foil layers of the laminate is to prevent the paperboard (the latter being the main substrate) from passing fluids, gases, or other possibly contaminating materials, including dust. Examples of containers thus formed are gable-top cartons for milk aseptic brick packs and paperboard cans.

The prior art is aware of methods for removing an inner layer of a laminate. For example, U.S. Patents 3,563,843 issued to Wagers, et al and 3,788,920 issued to Frappier disclose methods of removing a strip or portion of an exposed edge of corrugated paper in a corrugated paperboard laminate. The corrugated layer of the laminate may be deformed, compressed, or cut so as to thereby leave two overhanging portions, these being the portions of the flat paperboard which sandwich the corrugated paperboard. Thereafter, the overlapped portions are deformed and joined suitably as by pressing them together. Another method of insuring that the exposed raw edge of a paperboard layer in a similar laminate is protected is illustrated in U.S. Patent 3,654,842 issued to Schwenk. In that process, a top portion of the edge is removed, as by skiving, with the remaining portion bent back upon itself, to thereby seal or encapsulate the otherwise exposed raw edge of the paperboard.

The present invention is directed to a method and apparatus for providing raw edge protection on the edge of a paper laminate, such as a polyethylene-paper-polyethylene-aluminum foil-polyethylene laminate. Such laminates are useful in forming paperboard containers for foodstuffs or other products which are to be protected against the entry of moisture, bacteria, or other contaminants. According to the method and apparatus of this invention, a laser beam is employed to cut away or core the exposed edge of the paperboard layer of a paperboard-polyethylene laminate of the type where the paperboard is one of the intermediate layers. Such use of a laser permits increased speeds, i.e. increased linear metre (feet) per second, for continuous webs or for a series of blanks. After removal of a strip of the paperboard from an edge of the laminate, the remaining areas of the laminate at the edge are pressed together and sealed as by the retention and/or application of heat, to form container bodies. The resulting edge-treated laminate is resistant to the entry of contaminants to the paperboard layer of the laminate. Containers made in this manner result in a raw edge in the interior of the carton, which, if left unprotected, permit any fluid contained within the container to "wick" into the paperboard, thereby weakening the container so that it may rupture under stress. Thus, the interior of a container formed from such a paperboard laminate, treated as disclosed in those cases where an interior seam is present, is protected from contaminants and impurities of the paperboard and from undesirable reactions between the contents of the container thus formed and the otherwise raw or exposed edge of the paperboard layer of the laminate, i.e., wicking. It will be understood that both raw edges of a web, or any or all of the raw edges of a blank may be treated according to the practice of this invention.

In one embodiment of the invention, the latent or residual heat in the treated raw edge, generated by the action of the laser beam in burning away the paperboard edge is employed to heat the facing, overhanging portions of the polyethylene coating, after which these overhanging edges are pressed together to form the seal. In another embodiment, the treated edge is allowed to cool, while the overhanging edges are subsequently heated, as by a mechanical roller or any other convenient means, after which sealing is carried out.

In an alternative method, the new edge of the paperboard, defined after the strip removal, is sealed by placing molten polyethylene on it.

The full nature of the invention will be understood from the accompanying drawings and the following description and claims. It should be understood, however, that references in the following description to front, rear, or side edges are for convenience of description, and such terms are not intended to be used in a limiting sense.

F I G . 1 ist a partial cross-sectional view taken across a typical paperboard laminate of a continuous web or a single blank which is to be treated by the practice of this invention.

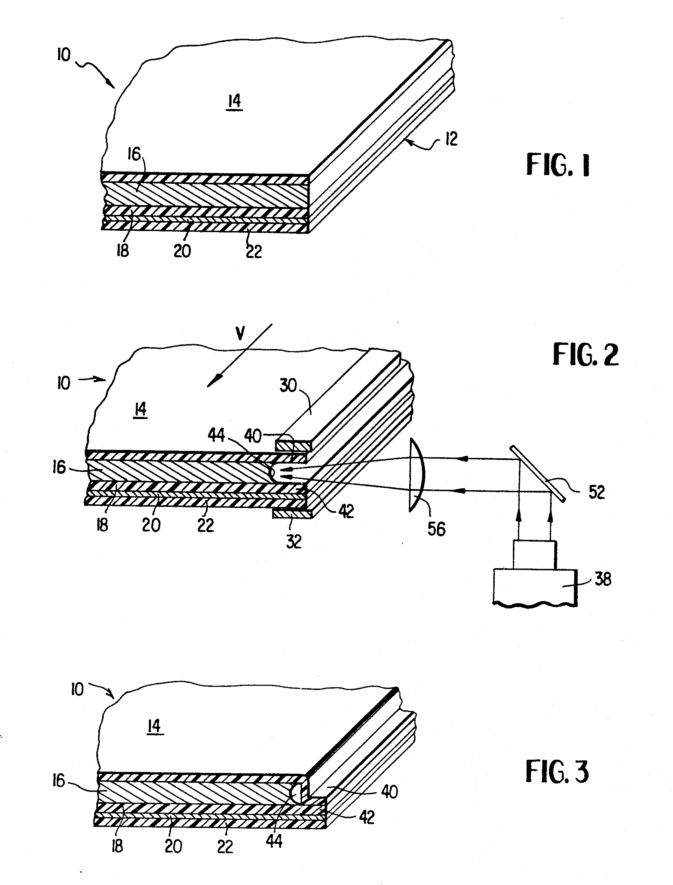

F I G . 2 illustrates the apparatus and method of the invention in applying a beam of laser energy to the exposed edge of the continuous web or single blank of FIG. 1.

F I G . 3 is a view illustrating the final configuration of the treated edge according to the practice of this invention.

F I G . 4 illustrates the relationship between laser power and linear web speed for three different coring depths.

F I G . 5 is a partially schematic view showing another method for sealing the cored edge of a continuous paperboard web or a single blank of the type shown of FIG. 1.

Referring now to the drawings, the numeral 10 denotes generally a laminated web one of whose edges is denoted by 12. The laminate is defined, typically, by a polyethylene layer 14, a paperboard layer 16, and second polyethylene layer 18, layer 20 of metallic foil such as aluminum foil (an option but not a necessity), and a final or lower polyethylene layer 22. It will be understood that the invention is not limited to polyethylene, but may be carried out with any thermoplastic material. The range of thickness of the polyethylene layer is typically between $2,54 \cdot 10^{-4}$ cm and 0,0127 cm (.0001" and .005") and the foil ranges between $2,54 \cdot 10^{-4}$ cm and 0,0127 cm (.0001" and .005") in thickness, while the paperboard layer 16 is typically of a thickness of 0,030 - 0,061 cm (.012-.024") and is formed from bleached sulfate paperboard. The web illustrated at FIG. 1 may be a portion of a single blank, or it may be a portion of a continuous web.

Referring now to FIG. 2, the numerals 30 and 32 denote respectively, upper and lower abutments to guide the edge 12 of the web. A source of laser energy, such as a laser indicated by the numeral 38, directs a laser beam towards a beam bender 52 and thereafter through a focusing lens 56 and thence to the exposed edge of the paperboard layer 16. A portion of this layer is burned away and is effectively removed, thereby defining overhanging or extending edges 40 and 42, of respectively, polyethylene layers 14 and 18. The removal of the raw edge from paperboard layer 16 by the laser beams defines a new edge 44 of the paperboard, the new edge being beneath or within the edge 12 of the web 10, with the still intact edges of the other laminate layers overhanging the new edge 44.

The carbon dioxide laser 38 which operates at a wavelength of 10.6 $\mu$m may be used to remove a part of the paperboard core or layer 16 from the laminate edge 12. The 10.6 $\mu$m radiation is strongly absorbed by paper products. The power and size of the laser system will depend on the process speed desired for production operation. Tests have shown that coated paperboard laminates 10 can be cored to a depth of 0,051 cm (0.020 inch) to 0,076 cm (0.030 inch) at 50,798 cm (20,000 inches) per minute with approximately 1 kilowatt of laser power.

As indicated at FIG. 2, the removal involves directing the unfocused laser beam (in tests run on coated paperboard products the unfocused beam was 1,27 cm (0.5 inches) in diameter) through a lens and

0152616

focusing the beam to a spot diameter less than the thickness of the laminate 10. The web whose edge is to be cored is rapidly transported under the beam, the motion of the web denoted by the arrow V, and the paperboard core material is vaporized by the focused laser beam.

The time to vaporize material to a depth W is given by the relationship

$$t_c = \frac{W\rho[C_p(T_v-T_o) + H_v]}{\eta I} \tag{1}$$

where,

W = depth of material vaporized
$\rho$ = density of material
$C_p$ = specific heat
$T_v$ = vaporization temperature
$T_o$ = initial temperature
$H_v$ = heat of vaporization
$\eta$ = laser coupling efficiency ($\approx 1$)
I = laser intensity (laser power divided by focal spot area i.e., P/A.)

The coring speed V is related to the vaporization time $t_c$ by the equation,

$$t_c = \frac{d}{V} \tag{2}$$

where d is the focal spot diameter. The relationship between coring speed V and laser power P is found from Equations (1) and (2) to be

$$V = \frac{4\eta P}{\pi W \rho d[C_p(T_v-T_o) + H_v]} \tag{3}$$

Approximate values for the thermophysical properties of typical paperboard material 16 are given below.

-7-

0152616

Table I.  Thermophysical Properties of Paperboard

| Parameter | Value |
|---|---|
| Density, $\rho$ | $0.9$ g/cm$^3$ |
| Specific heat, $C_p$ | $2J/g-^{\circ}C$ |
| Vaporization temperature, $T_v$ | $250$ $^{\circ}C$ |
| Heat of Vaporization, $H_v$ | $500J/g$ |

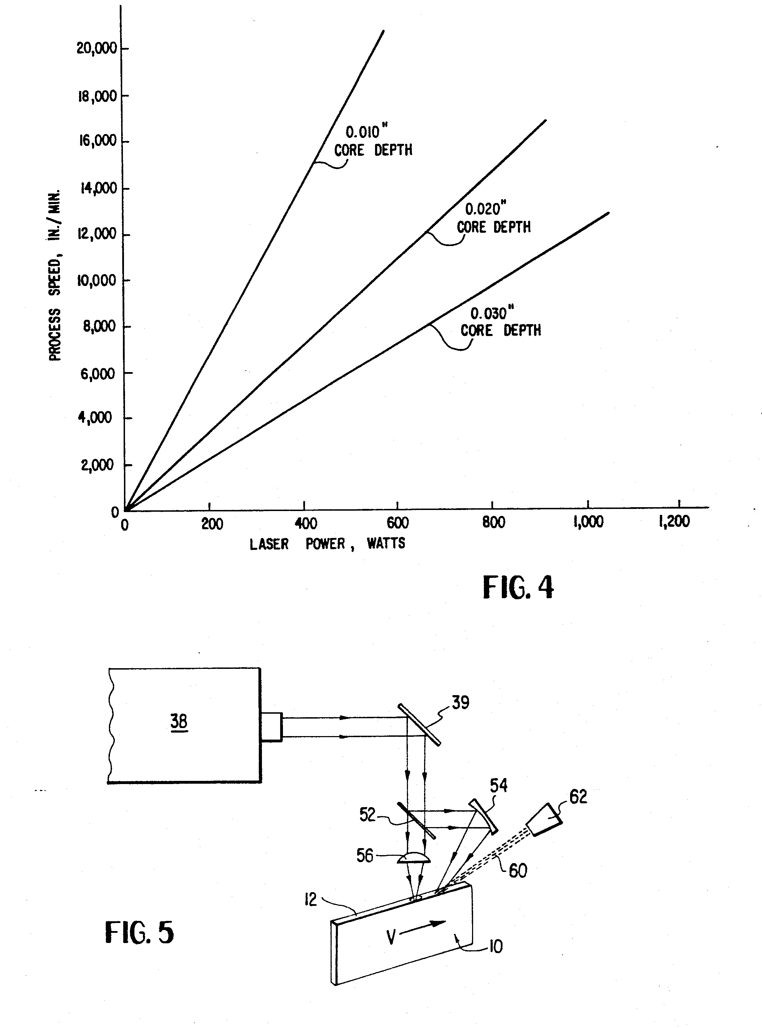

The relationship between the linear coring speed V and laser power is shown in FIG. 4 for cases where a 0,0381 cm (0.015 inch) diameter laser beam is used to core paperboard to depths of 0,025 cm (0.010 inch), 0,051 cm (0.020 inch)and 0,076 cm (0.030 inch).

A $CO_2$ laser was used to test coring in various coated paperboard laminates.  The short dwell time associated with high speed movement of the workpiece was simulated by rapid turn on and turn off the laser beam.  A 1,27 cm (0.5 inch) diameter laser beam was directed to the edge of the paperboard laminates by a beam bending mirror 52.  The beam was focused to a 0,048 cm (0.019 inch) diameter spot with a 13 cm (five inch) focal length zinc selenide lens.  It was determined that the laminates could be cored to a depth of 0,076 cm (0.030 inch) in 0.001 second.  The laser power at the workpiece surface was 145 watts.

Using the relationship between dwell time and spot diameter given by Equation (2), the experimental coring tests predict that a 145 watt $CO_2$ laser can core paperboard at a speed of 28,95 m/min (1140 inches per minute).  Based on the thermophysical properties given in Table I and the experimental parameters, Equation (3) predicts a process speed of 34,85 m/min (1372 inches per minute).  In view of the approximate values for the thermophysical parameters, agreement between theory and experiment is considered satisfactory.

FIG. 3 illustrates the final configuration of the treated edge of the web or blank. Overhanging or extending coating portions 40 and 42 have been pressed together and heat sealed, to thereby encapsulate the edge 44 of paperboard layer 16.

In arriving at the final configuration illustrated at FIG. 3, the residual heat of the facing surfaces of overhanging portions 40 and 42 may be employed as the heat required to render them somewhat soft and tacky and hence suspectible of heat sealing when pressed together. Alternatively, the step of FIG. 2 may be followd by cooling, after which the overhanging portions 40 and 42 are reheated, as by contact with heated rollers, or by another laser beam, and subsequently sealed.

Another method of sealing the cored edge 12 of the web is shown at FIG. 5. This method comprises melting of polyethylene into the cored recess formed by the laser beam. The source of polyethylene may be a thin rod or filament fed into the work zone or a fine stream of polyethylene powder. The latter is illustrated at FIG. 5, the polyethylene powder stream denoted by the numeral 60 issuing from a nozzle 62. The use of powder appears to be more attractive than a consumable rod of polyethylene for some systems.

The polyethylene of the rod or of the stream may be melted by the laser beam or an alternate heat source such as hot air. A technique which involves splitting a fraction of the laser beam to melt the incident stream of polyehtylene powder is shown in FIG. 5. Two beam splitters are denoted by 39 and 52 respectively, a concave mirror by 54 and the focusing lens by 56.

The power required to heat a stream of polyethylene powder to its melting temperature is given by

$$P = \frac{\rho C_p X^2 (T_m - T_o) V}{\eta} \qquad (4)$$

where X is the cross-sectional dimension of the beam 60 of polyethylene powder and $T_m$ is the melting temperature of polyethylene. The coupling efficiency $\eta$ will be less than one because polyethylene is substantially transparent at 10.6 $\mu$m. The fraction of the incident laser light absorbed in a beam of polyethylene powder of thickness x is given by

$$\eta = (1 - e^{-\alpha x}) \qquad (5)$$

where $\alpha$ is the absorption coefficient which is approximately equal to 18 $cm^{-1}$. From Equations (4) and (5) it is found that the laser power needed to heat a 0,051 cm (0.020 inch) thick beam (width of paperboard laminate) of polyethylene powder is,

$$P = 3,86 \cdot 10^{-2} V \qquad (6)$$

where P is in watts and V in 2,5399 cm/min (inches per minute).

Generally speaking, the present invention is directed to a method of treating a laminate wherein the laminate includes at least one inner layer of paperboard and at least two layers of polyethylene, one on either side of the paperboard layer. The laminate may be in the form of a continuous web or a single blank, the web or blank having a straight edge. This straight edge is such that a raw or exposed portion of the paperboard layer of the laminate runs along the edge. The method includes the steps of: a) removing by burning with a laser beam a strip of the paperboard layer which is sandwiched by the polyethylene layers; and b) then pressing the resultant overhanging edge portions of the polyethylene layers together, whereby the otherwise raw or exposed edge of the paperboard along the web or blank is sealed beneath and by the pressed together polyethylene layers. The web or blank so treated may then be employed to form a container, the container not having an exposed or raw interior paperboard edge, which might otherwise allow wicking of the contents of the container into the paperboard layer. In an alternative method, the new edge of the paperboard defined after the strip removal, is sealed by placing molten polyethylene on it.

Although the invention has been described above by reference to a preferred embodiment, it will be appreciated that other constructions may be devised, which are, nevertheless, within the scope and spirit of the invention and are defined by the claims appended hereto.

<u>Claims:</u>

1. A method of treating a laminate in the form of a continuous web or a single blank wherein the laminate includes at least one inner layer of paperboard and at least two layers of a thermoplastic material, one on either side of the paperboard layer, the laminate having a straight edge, the straight edge being such that a raw or exposed portion of the paperboard layer of the laminate runs along the edge, the method characterized by the steps of removing a strip of the paperboard layer (16) which is sandwiched by the thermoplastic layers (14, 18) by the use of a laser beam, then providing a seal over the otherwise raw or exposed edge of the paperboard (16) along the web or blank whereby the treated web or blank may be employed to form a container, the container not exhibiting an interior exposed or raw paperboard edge which might otherwise allow wicking of the contents of the container into the paperboard layer.

2. The method of claim 1 characterized by providing said seal by pressing the resultant overhanging portions (40, 42) of the thermoplastic layers (14, 18) together.

3. The method of claim 1 characterized by providing said seal by melting a powder stream (60) of thermoplastic material on the remaining new edge (44) of the burnt away paperboard layer (16).

4. The method of claim 1 characterized by providing said seal by melting a filament of thermoplastic material on the remaining, new edge (44) of the burnt away paperboard layer (16).

5. The method of claim 1 characterized by the latent heat in the edge of the web or blank generated by the action of the laser beam in burning away a strip of the paperboard (16) being employed as a heat source to fuse the thermoplastic layers (40, 42) together.

6. The method of any one of the preceding claims characterized by the fact that the thermoplastic material is polyethylene.

7. The method of claim 1 characterized by the edge (12) of the web or blank being cooled subsequent to the action of the laser beam in burning away a portion of the paperboard edge, then heating the thermoplastic overhanging portions (40, 42) and pressing them together to thereby effect raw edge encapsulation.

8. The method of claim 7 characterized by the thermoplastic material being polyethylene.

9. The method of claim 1 characterized by the laser beam and the laminate (10) being moved relative to one another during the removal of the edge strip of the paperboard (16).

FIG. 1

FIG. 2

FIG. 3

**FIG. 4**

**FIG. 5**